# EUROPÄISCHE PATENTSCHRIFT

(11) **EP 4 421 339 B1**
(45) Veröffentlichungstag und Bekanntmachung des Hinweises auf die Patenterteilung: **22.04.2026**
(21) Anmeldenummer: 23158802.1
(22) Anmeldetag: 27.02.2023
(51) Int. Cl.: F16D 3/205

(54) **ANTRIEBSWELLE MIT INTEGRALEM TRIPODESTERN**
DRIVE SHAFT WITH INTEGRAL TRIPOD STAR
ARBRE D'ENTRAÎNEMENT AVEC ÉTOILE TRIPODE INTÉGRALE

(43) Veröffentlichungstag der Anmeldung: 28.08.2024
(73) Patentinhaber: CP Tech GmbH, 33142 Büren (DE)
(72) Erfinder: CASEY, Thomas Joseph, 33154 Salzkotten (DE)
(74) Vertreter: Patentanwälte Dörner & Kötter PartG mbB

(56) Entgegenhaltungen:
- EP-A1- 0 239 427
- DE-A1- 102011 052 474
- DE-A1- 102019 134 393
- DE-B1- 2 355 766
- FR-A1- 2 538 476
- JP-A- 2006 183 725
- JP-A- 2017 141 945
- US-A1- 2017 122 377
- US-A1- 2021 372 485

## Beschreibung

Die Erfindung betrifft eine Antriebswelle für den Antriebsstrang eines Kraftfahrzeugs, nach dem Oberbegriff des Patentanspruchs 1.

Um das Antriebsmoment eines Fahrzeugantriebs auf an die Fahrzeugräder zu übertragen, werden in den Seitenwellen Gleichlaufgelenke eingesetzt, wobei nicht nur Winkelveränderungen zwischen den Fahrzeugrädern und dem Fahrzeugantrieb ausgeglichen werden müssen, sondern auch Längenveränderungen kompensiert werden müssen. Daher ist üblicherweise das radseitige Gleichlaufgelenk als Festgelenk ausgebildet, wohingegen das getriebeseitige Gleichlaufgelenk regelmäßig eine axiale Verschiebemöglichkeit aufweist. An der Antriebsseite wird das Gleichlaufgelenk vorzugsweise als Tripodegelenk ausgeführt. Hierbei umfasst das Tripodegelenk ein Gelenkaußenteil und ein von diesem aufgenommenes Gelenkinnenteil, mit einem Zentralkörper, an dem drei Zapfen angeformt sind, wodurch ein Tripodestern gebildet ist. Auf den Zapfen ist jeweils ein Rollenkörper angeordnet, der über ein Nadellager auf dem Zapfen gelagert ist. Das Zentralteil ist zur Befestigung auf einer Welle als Ringteil ausgebildet. Die Verbindung zwischen dem Zentralkörper und der Welle erfolgt über eine Keilverzahnung, die sowohl auf der Welle als auch im Zentralkörper ausgeführt ist. Ein solches Tripodegelenk ist beispielsweise in der DE 10 2020 212 991 A1, der US 2021/0372485 A1, der DE 11 2007 003 668 T5, der DE 10 2011 052 474 A1 der US 2017/122377 A1 sowie der gattungsgemäßen JP 2017 141945 A beschrieben.

Die Herstellung einer mit einem Tripodegelenk versehenen Antriebswelle erweist sich als sehr aufwändig. Zunächst wird der Tripodestern meist mittels eines Umformvorgangs hergestellt und mit einer Keilverzahnung versehen, wobei auch die Welle mit einer Keilverzahnung zu versehen ist. Nachfolgend muss der Tripodestern im Rahmen der Montage auf die Welle aufgebracht und axial gesichert werden.

Hier setzt die vorliegende Erfindung an. Der Erfindung liegt die Aufgabe zu Grunde, eine Antriebswelle mit einem Tripodestern für den Antriebsstrang eines Kraftfahrzeugs bereitzustellen, die aufwandminimiert herzustellen ist. Gemäß der Erfindung wird diese Aufgabe durch eine Antriebswelle mit den Merkmalen des Patentanspruchs 1 gelöst.

Mit der Erfindung ist eine Antriebswelle mit einem Tripodestern für den Antriebsstrang eines Kraftfahrzeugs bereitzustellen, die aufwandminimiert herzustellen ist. Dadurch, dass der Tripodestern durch einen umgeformten Abschnitt des Wellenkörpers gebildet ist, ist eine einteilige Antriebswelle erzielt, wodurch keine aufwändige Herstellung einer Verzahnung und keine Montage des Tripodesterns auf der Welle erforderlich. Darüber hinaus ist durch die einteilige Ausgestaltung die Übertragung größerer Drehmomente gegenüber der über eine Verzahnung gebildeten formschlüssigen Verbindung von Welle und Tripodestern ermöglicht. Bevorzugt ist der Tripodestern durch Stauchung der Welle ausgebildet. Besonders bevorzugt ist die Antriebswelle als Schmiedeteil ausgebildet.

Der Wellenkörper weist an seinen beiden Enden einen Tripodestern auf, wobei die Antreibswelle aus einer Stahllegierung hergestellt ist**.**

In Weiterbildung der Erfindung ist der Wellenkörper hohl, insbesondere rohrförmig ausgebildet. Hierdurch ist eine Gewichtsreduzierung der Antriebswelle erzielt.

In Ausgestaltung der Erfindung weist der Wellenkörper in einem den Tripodezapfen des Tripodesterns vorgelagerten Endabschnitt eine gegenüber einem mittleren, vorzugsweise zylindrischen Abschnitt eine dickere Wandstärke auf. Hierdurch ist die Verwindungssteifigkeit der Welle im Bereich des Tripodesterns erhöht, wodurch eine Übertragung höherer Drehmomente ermöglicht ist.

Erfindungsgemäß ist die Antriebwelle aus einer Stahllegierung hergestellt. Hierdurch ist eine Kostengünstige Herstellung bei gleichzeitig hoher Festigkeit erzielt. Darüber hinaus ist auf Basis dieses Materials eine bereichsweise Härtung ermöglicht. Vorteilhaft ist die Stahllegierung ein Hochleistungsstahl, insbesondere 42 SiCrNbB 8-4, bekannt unter dem Handelsnamen "CPDUR 2000".

In Weiterbildung der Erfindung sind die Tripodezapfen zylinderförmig ausgebildet und vorzugsweise gehärtet ausgebildet. Bevorzugt weist der Tripodestern drei regelmäßig über den Umfang verteilte Tripodezapfen auf.

In Ausgestaltung der Erfindung Besonders bevorzugt sind die Tripodezapfen mit einer axialen Bohrung versehen. Hierdurch ist eine weitere Gewichtsreduzierung erzielt.

In Weiterbildung der Erfindung nehmen die Tripodezapfen jeweils eine Rolleinheit auf, die eine Vielzahl von Rollkörpern umfasst und die vorzugsweise durch ein Nadellager gebildet ist.

Der Erfindung liegt weiterhin die Aufgabe zu Grunde, ein Verfahren zur aufwandminimierten Herstellung einer Antriebswelle mit einem Tripodestern für den Antriebsstrang eines Kraftfahrzeugs bereitzustellen. Gemäß der Erfindung wird diese Aufgabe durch ein Verfahren mit den Merkmalen des Patentanspruchs 10 gelöst. Dabei wird an einem Metallrohr, insbesondere einem Stahlrohr an beiden Enden durch Umformung, insbesondere durch Stauchen jeweils ein Tripodestern ausgebildet, der wenigstens drei umlaufend angeordnete Tripodezapfen aufweist, wonach der Tripodestern spanend nachbearbeitet wird, wobei die Tripodezapfen der beiden gegenüberliegenden Tripodesterne versetzt zueinander angeordnet sind.

In Weiterbildung der Erfindung erfolgt die Umformung zumindest teilweise durch einen Schmiedeprozess. Hierdurch ist ein homogenes Materialgefüge erzielbar.

In Ausgestaltung der Erfindung wird das Metallrohr derart umgeformt, dass im Bereich des Tripodesterns eine dickere Rohwandstärke gebildet ist, als im mittleren Bereich des Rohres.

In weiterer Ausgestaltung der Erfindung wird der wenigstens eine Tripodestern zumindest im Bereich seiner Tripodezapfen gehärtet. Bevorzugt erfolgt der Härteprozess mittels Wärmebehandlung mit Niederdruckaufkohlen und nachfolgendem Abschrecken Hierdurch werden die mechanischen Eigenschaften der Randschicht wie beispielsweise Verschleißeigenschaften verbessert. Vorzugsweise erfolgt das Abschrecken mittels eines Hochdruckgases. Durch eine solche "Trockenabschreckung" ist keine Reinigung der Antriebswelle nach der Wärmebehandlung erforderlich.

In Weiterbildung der Erfindung wird die Antriebswelle vor dem Härten zumindest bereichsweise mit einer Kupferschicht versehen. Hierdurch ist eine Abde-ckung nicht zu härtender Bereiche erzielt, durch die eine Aufnahme von Kohlenstoff verhindert ist. Darüber hinaus ergeben sich verringerte Maßabweichungen durch die temperaturunabhängige Wärmeübertragung während des Hochdruck-Gasabschreckens sowie verbesserte mechanische Eigenschaften, insbesondere verbesserte Ermüdungseigenschaften, da keine intergranulare Oxida-tionsschicht gebildet wird.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

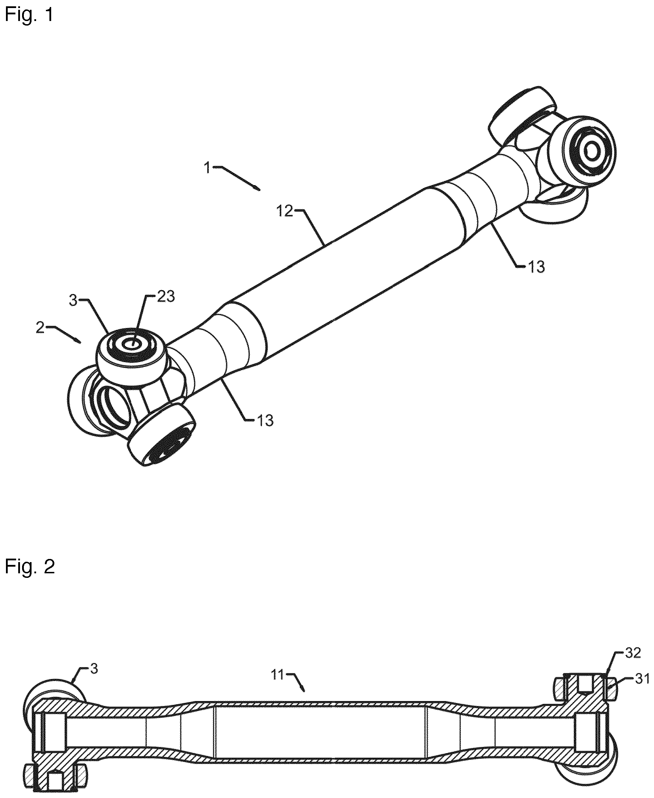

- Figur 1:: die schematische Darstellung einer Antriebswelle mit :
- Figur 2:: die Darstellung der Antriebswelle aus Figur 1 im Längsschnitt;

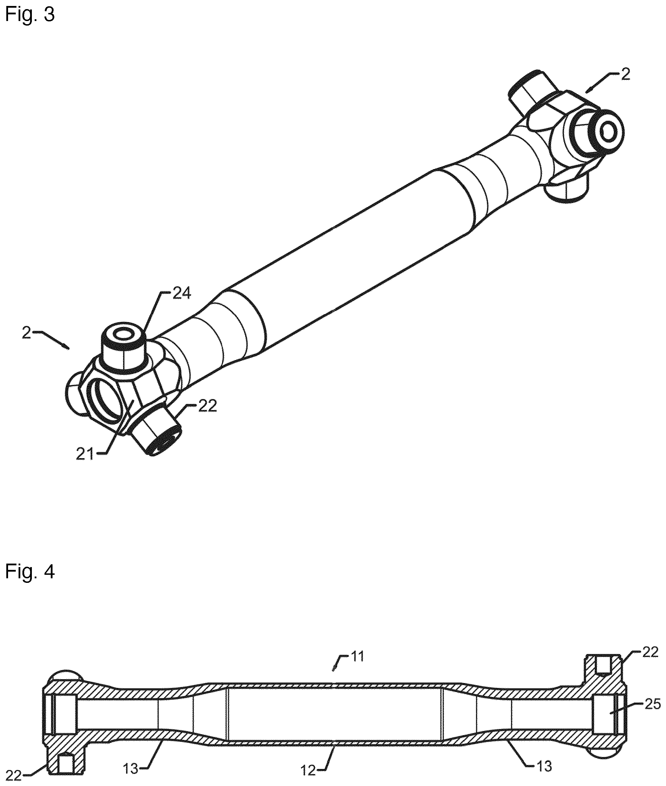

- Figur 3:: die Darstellung der Antriebswelle aus Figur 1 ohne Rollenkörper und
- Figur 4:: die Darstellung der Antriebswelle aus Figur 3 im Längsschnitt.

Die als Ausführungsbeispiel gewählte Antriebswelle 1 ist aus einer Stahllegierung hergestellt und umfasst einen rohrförmigen Wellenkörper 11 mit einem mittleren zylindrischen Abschnitt 12, an den sich beidseitig jeweils ein durchmesserverjüngter Endabschnitt 13 anschließt. Die beiden Endabschnitte 13 weisen gegenüber dem zylindrischen Mittelabschnitt 12 eine dickere Wandstärke auf. Endseitig gehen die beiden Endabschnitte 13 einteilig jeweils in einen Tripodestern 2 über.

Der Tripodestern 2 umfasst einen Tripodering 21, an den umlaufend jeweils um 120 Grad versetzt zueinander drei Tripodenzapfen 22 angeformt sind. Mittig sind die drei Tripodezapfen 22 jeweils mit einer axialen Bohrung 23 versehen. Im Ausführungsbeispiel sind die Tripodezapfen 22 oberflächengehärtet ausgebildet. Die beiden endseitig an dem Wellenkörper 11 vorhandenen Tripodesterne 2 sind mit ihren Tripodezapfen 22 um 60 Grad zueinander versetzt angeordnet.

Auf die Tripodezapfen 22 ist jeweils eine Rolleinheit 3 aufgebracht, die über ein Nadellager 31 auf dem Tripodezapfen 22 drehbar gelagert sind. Dabei sind die Rolleinheiten 3 jeweils über einen Sicherungsring 32, der in eine hierzu an den Tripodezapfen vorgesehene Nut 34 eingreifen, axial gesichert.

Die Antriebswelle 1 mit den an dieser angeordneten Tripodesternen 2 ist einteilig aus einem zylindrischen Rohr durch einen Umformprozess hergestellt. Hierbei wird zunächst ein Schmiedeteil mit verjüngten Endabschnitten 13 und angestauchten Tripodesternen gefertigt. Nachfolgend wird die Kontur der Tripodesterne 2 vorgefräst und die Innenkontur 25 der Tripoderinge 21 auf Passung mit Vorhaltemaß vorgedreht. Anschließend wird das gesamte Bauteil im Tauch-verfahren verkupfert. Nun werden die Tripodezapfen 22 zur Entfernung der Kupferschicht nachgefräst und einem Härteprozess unterzogen, bei dem eine Wärmebehandlung der Tripodezapfen 22 mit Niederdruckaufkohlen erfolgt. Hierdurch wird eine harte Oberfläche der Tripodezapfen 22 bei einem weichen Innenkern erzielt. Die Tripodezapfen werden nun auf Endkontur gefräst. Optional kann nun der Wellenkörper 11 von der Kupferschicht befreit werden. Nachfolgend werden die Rolleinheiten 3 mit den Nadellagern 21 auf die Tripodenzapfen 22 aufgebracht und mit einem Sicherungsring 32 axial gesichert.

## Patentansprüche

1. Antriebswelle für den Antriebsstrang eines Kraftfahrzeugs, umfassend einen Wellenkörper (11), der an wenigstens einem Ende mit einem Tripodestern (2) versehen ist, der wenigstens drei Tripodezapfen (22) zur Aufnahme jeweils einer Rolleinheit (3) aufweist, wobei der Tripodestern (2) durch einen umgeformten Abschnitt des Wellenkörpers (11) gebildet ist, **dadurch gekennzeichnet, dass** die Antriebwelle (1) aus einer Stahllegierung hergestellt ist, wobei der Wellenkörper (11) an seinen beiden Enden einen Tripodestern (2) aufweist.

2. Antriebswelle nach Anspruch 1, **dadurch gekennzeichnet, dass** der Wellenkörper (11) hohl, insbesondere rohrförmig ausgebildet ist.

3. Antriebswelle nach Anspruch 2, **dadurch gekennzeichnet, dass** der Wellenkörper (11) in einem den Tripodezapfen (22) des Tripodesterns (2) vorgelagerten Endabschnitt (13) gegenüber einem mittleren, vorzugsweise zylindrischen Abschnitt (12) eine dickere Wandstärke aufweist.

4. Antriebswelle nach einem der vorgenannten Ansprüche, **dadurch gekennzeichnet, dass** die Tripodezapfen (22) zylinderförmig ausgebildet sind.

5. Antriebswelle nach einem der vorgenannten Ansprüche, **dadurch gekennzeichnet, dass** der Tripodestern (2) drei regelmäßig über den Umfang verteilte Tripodezapfen (22) aufweist.

6. Antriebswelle nach einem der vorgenannten Ansprüche, **dadurch gekennzeichnet, dass** die Tripodezapfen (22) der beiden gegenüberliegenden Tripodesterne (2) versetzt zueinander angeordnet sind.

7. Antriebswelle nach einem der vorgenannten Ansprüche, **dadurch gekennzeichnet, dass** die Tripodezapfen (22) jeweils eine Rolleinheit (3) aufnehmen, die eine Vielzahl von Rollkörpern umfasst, die vorzugsweise durch ein Nadellager (31) gebildet ist.

8. Antriebswelle nach einem der vorgenannten Ansprüche, **dadurch gekennzeichnet, dass** die Tripodezapfen (22) gehärtet ausgebildet sind.

9. Antriebwelle nach einem der vorgenannten Ansprüche, **dadurch gekennzeichnet, dass** die Tripodezapfen (22) mit einer axialen Bohrung (23) versehen sind.

10. Verfahren zur Herstellung einer Antriebswelle nach einem der vorgenannten Ansprüche, wobei an einem Metallrohr, insbesondere einem Stahlrohr an beiden Enden durch Umformung ein Tripodestern (2) ausgebildet wird, der wenigstens drei umlaufend angeordnete Tripodezapfen (22) aufweist, wonach der Tripodestern (2) spanend nachbearbeitet wird.

11. Verfahren nach Anspruch 10, **dadurch gekennzeichnet, dass** die Tripodezapfen (22) mit einer axialen Bohrung (23) versehen werden.

12. Verfahren nach Anspruch 10 oder 11, **dadurch gekennzeichnet, dass** der wenigstens eine Tripodestern (2) zumindest im Bereich der Tripodezapfen (22) gehärtet wird.

13. Verfahren nach Anspruch 12, **dadurch gekennzeichnet, dass** die Antriebswelle vor dem Härten zumindest bereichsweise mit einer Kupferschicht versehen wird.

## Claims

1. Drive shaft for the drive train of a motor vehicle, comprising a shaft body (11), provided with a tripod star (2) on at least one end, comprising at least three tripod pins (22) for taking up one roll unit (3) each, wherein the tripod star (2) is formed by a reshaped section of the shaft body (11), **characterised in that** the drive shaft (1) is made of a steel alloy, wherein the shaft body (11) has a tripod star (2) on its two ends.

2. Drive shaft in accordance with claim 1, **characterised in that** the shaft body (11) is formed hollow, in particular tubular.

3. Drive shaft in accordance with claim 2, **characterised in that** the shaft body (11) has a wall thickness that is thicker in an end section (13) that is in front of the tripod pins (22) of the tripod star (2) than a medium, preferably cylindrical, section (12).

4. Drive shaft in accordance with one of the preceding claims, **characterised in that** the tripod pins (22) are formed cylindrical.

5. Drive shaft in accordance with one of the preceding claims, **characterised in that** the tripod star (2) has three tripod pins (22) that are distributed at regular intervals across the circumference.

6. Drive shaft in accordance with one of the preceding claims, **characterised in that** the tripod pins (22) of the two opposite tripod stars (2) are arranged offset against each other.

7. Drive shaft in accordance with one of the preceding claims, **characterised in that** the tripod pins (22) each hold a rolling unit (3) that comprises a plurality of rolling bodies that is preferably formed by a needle bearing (31).

8. Drive shaft in accordance with one of the preceding claims, **characterised in that** the tripod pins (22) are formed hardened.

9. Drive shaft in accordance with one of the preceding claims, **characterised in that** the tripod pins (22) are provided with an axial bore (23).

10. Procedure for manufacturing a drive shaft in accordance with one of the preceding claims, wherein a tripod star (2) that has at least three circumferentially arranged tripod pins (22) is formed on a metal tube, particularly a steel tube, by reshaping on both ends, following which the tripod star (2) is machined in post-processing.

11. Method in accordance with claim 10, **characterised in that** the tripod pins (22) are provided with an axial bore (23).

12. Method in accordance with claim 10 or claim 11, **characterised in that** the at least one tripod star (2) is hardened at least in the area of the tripod pins (22).

13. Method in accordance with claim 12, **characterised in that** the drive shaft is provided with a copper layer at least in some areas before hardening.

## Revendications

1. Arbre d'entraînement pour le groupe motopropulseur d'un véhicule, comprenant un corps d'arbre (11) doté à au moins une extrémité d'une étoile tripode (2) présentant au moins trois tourillons (22) pour loger respectivement une unité de roulement (3), sachant que l'étoile tripode (2) est formée par une section façonnée du corps d'arbre (11), **caractérisé en ce que** l'arbre d'entraînement (1) est fabriqué en alliage d'acier, sachant que le corps d'arbre (11) présente une étoile tripode (2) à ses deux extrémités.

2. Arbre d'entraînement selon la revendication 1, **caractérisé en ce que** le corps d'arbre (11) est creux, notamment de forme tubulaire.

3. Arbre d'entraînement selon la revendication 2, **caractérisé en ce que** le corps d'arbre (11) dans une extrémité (13) en amont des tourillons (22) de l'étoile tripode (2) en face d'une section moyenne, de préférence cylindrique (12), présente une paroi plus épaisse.

4. Arbre d'entraînement selon l'une des revendications précédentes, **caractérisé en ce que** les tourillons du tripode (22) sont de forme cylindrique.

5. Arbre d'entraînement selon l'une des revendications précédentes, **caractérisé en ce que** l'étoile tripode (2) présente trois tourillons du tripode (22) répartis à intervalles réguliers sur la circonférence.

6. Arbre d'entraînement selon l'une des revendications précédentes, **caractérisé en ce que** les tourillons du tripode (22) des deux étoiles tripodes (2) opposées sont disposés décalés les uns par rapport aux autres.

7. Arbre d'entraînement selon l'une des revendications précédentes, **caractérisé en ce que** les tourillons du tripode (22) accueillent chacun une unité de roulement (3) qui comprend de nombreux corps de roulement formés de préférence par un palier à aiguilles (31).

8. Arbre d'entraînement selon l'une des revendications précédentes, **caractérisé en ce que** les tourillons du tripode (22) sont trempés.

9. Arbre d'entraînement selon l'une des revendications précédentes, **caractérisé en ce que** les tourillons du tripode (22) sont dotés d'un orifice axial (23).

10. Procédé de fabrication d'un arbre d'entraînement selon l'une des revendications précédentes, sachant que sur un tube en métal, notamment un tube en acier, une étoile tripode (2) qui présente au moins trois tourillons du tripode (22) disposés sur sa circonférence est formée aux deux extrémités par façonnage, après quoi l'étoile tripode (2) est reprise par enlèvement de copeaux.

11. Procédé selon la revendication 10, **caractérisé en ce que** les tourillons du tripode (22) sont dotés d'un orifice axial (23).

12. Procédé selon la revendication 10 ou 11, **caractérisé en ce qu'**au moins une étoile tripode (2) est trempée au moins dans la zone des tourillons du tripode (22).

13. Procédé selon la revendication 12, **caractérisé en ce qu'**avant la trempe, l'arbre d'entraînement est dotée au moins par endroits d'une couche de cuivre.
